# EUROPÄISCHE PATENTSCHRIFT

(11) **EP 2 963 195 B1**
(45) Veröffentlichungstag und Bekanntmachung des Hinweises auf die Patenterteilung: **05.10.2016**
(21) Anmeldenummer: 15165178.3
(22) Anmeldetag: 27.04.2015
(51) Int. Cl.: E03C 1/10, F16K 15/00

(54) **ROHRBELÜFTER**
TUBE AERATOR
RENIFLARD

(30) Priorität: 03.07.2014 DE 202014103079 U
(43) Veröffentlichungstag der Anmeldung: 06.01.2016
(73) Patentinhaber: Flühs Drehtechnik GmbH, 58515 Lüdenscheid (DE)
(72) Erfinder: Thurau, Friedrich, 58849 Herscheid (DE)
(74) Vertreter: Patentanwälte Dörner & Kötter PartG mbB

(56) Entgegenhaltungen:
- DE-A1- 2 020 610
- DE-A1- 2 534 175
- DE-A1- 19 515 282
- DE-U1- 29 611 998

## Beschreibung

Die Erfindung betrifft einen Rohrbelüfter insbesondere für Trinkwasserinstallationen nach dem Oberbegriff des Patentanspruchs 1.

Rohrbelüfter werden in Trinkwasserleitungen als selbsttätige Sicherungseinrichtungen eingesetzt, um bei eintretendem Unterdruck in der Trinkwasserleitung ein Rücksaugen von Wasser in das Rohrnetz zu verhindern. Ein solcher Rohrbelüfter ist beispielsweise in der DE 296 11 998 U1 beschrieben. Hierbei ist ein vom Druck des durchströmenden Wassers gegen einen Belüftungseinsatz abdichtender Schließkörper angeordnet, der im Falle eines Unterdrucks in der Leitung gegen einen im Belüftungseinsatz gesondert angeordneten elastischen Dichtungssitz schließt.

Nachteilig an den vorbekannten Rohrbelüftern ist, dass in dem Fall, dass ein Unterdruck einmal aufgetreten ist, wodurch die Dichtung des Schließkörpers einmal angehoben worden ist, aufgrund von Verschmutzung oder Verkrustung der umgebenden Bereiche ein optimaler Sitz nicht mehr gewährleistet ist. Hierdurch kann es zum Austritt von Wasser aus den Belüftungskanälen kommen.

Hier will die Erfindung Abhilfe schaffen. Der Erfindung liegt die Aufgabe zu Grunde, einen Rohrbelüfter bereitzustellen, bei dem ein Austritt von Wasser durch die seitlichen Belüftungskanäle auch nach mehrfachem Anheben der Dichtung des Schließkörpers verhindert ist. Gemäß der Erfindung wird diese Aufgabe durch die Merkmale des kennzeichnenden Teils des Patentanspruchs 1 gelöst.

Mit der Erfindung ist ein Rohrbelüfter bereitgestellt, bei dem auch nach mehrfachem Anheben der Dichtung des Schließkörpers aufgrund eines Unterdrucks ein Austreten von Wasser durch die seitlichen Belüftungskanäle vermieden ist. Dadurch, dass innerhalb der Sackbohrung ein Ventilkörper angeordnet ist, der über ein Federelement gegen einen oberhalb der Einmündung des wenigstens einen Belüftungskanals innerhalb der Sackbohrung angeordneten Ventilsitz vorgespannt ist, ist ein Eindringen von Wasser in den wenigstens einen Belüftungskanal wirksam verhindert. Dabei sei an dieser Stelle klargestellt, dass ein Hineinragen des umlaufenden Randes des Schließkörpers in wenigstens einen Durchflusskanal im Sinne der vorliegenden Erfindung auch dann vorliegt, wenn der umlaufende Rand in den Wasserstrom des Durchflusskanals im Sinne einer gedanklichen Weiterführung des Kanals hineinragt. Entscheidend ist vorliegend der Effekt der Druckbeaufschlagung des umlaufenden Randes des Schließkörpers durch den Wasserstrom.

In Weiterbildung der Erfindung ist der Schließkörper durch eine Scheibe gebildet, an die axial ein zumindest bereichsweise umlaufender Kragen mit geringerem Durchmesser angeformt ist. Hierdurch ist eine gute Führung des Schließkörpers in der Sackbohrung erzielt, wobei durch den in den Durchflusskanal hineinragenden Rand ein kontinuierlicher Andruck des Schließkörpers aufgrund des Wasserstroms bewirkt ist.

In Ausgestaltung der Erfindung sind an dem Kragen außen Nasen angeordnet, die in eine innerhalb der Sackbohrung angeordnete zumindest bereichsweise umlaufende Nut eingreift. Hierdurch ist eine verliersichere Anordnung des Schließkörpers in der Sackbohrung erzielt.

In weiterer Ausgestaltung der Erfindung ist in der Sackbohrung ein hülsenförmiger Einsatz eingebracht, in dem der Ventilkörper entlang einer Führung axial verschiebbar angeordnet ist, wobei der Ventilkörper als Ventilstempel ausgebildet ist, der über das Federelement gegen einen in dem Einsatz angeformten Ventilsitz vorgespannt ist. Hierdurch ist ein kompaktes Ventilmodul erzielt, das einfach innerhalb der Sackbohrung montierbar ist und das ein Eindringen von Wasser in die Belüftungskanäle wirksam verhindert. Im Fall eines Defektes kann dieser Einsatz einfach gegen einen funktionsfähigen Einsatz ausgetauscht werden, ohne dass der Rohrbelüfter als solches getauscht werden muss.

In vorteilhafter Ausgestaltung ist an dem Einsatz an seiner dem Ventilsitz gegenüberliegenden Oberseite eine horizontale Verstrebung angeordnet, wobei das Federelement eine Druckfeder, insbesondere eine Schraubenfeder ist, die zwischen Ventilkörper und Verstrebung verspannt ist. Hierdurch ist eine zuverlässige Vorspannung des Ventilstempels bei gleichzeitiger hoher Luftstromdurchlässigkeit des Einsatzes bewirkt. Bevorzugt sind zusätzlich in dem Mantel des Einsatzes umlaufend Fenster eingebracht.

In Weiterbildung der Erfindung ist die Führung durch eine in der Verstrebung angeordnete Führungshülse gebildet, in die der Ventilstempel hineinragt. Hierdurch ist eine kompakte Führung des Führungsstempels erzielt. Vorteilhaft ist die Verstrebung durch wenigstens drei, bevorzugt vier in gleichem Winkel zueinander sich radial von außen in die Mitte des Einsatzes erstreckende Streben gebildet.

In Weiterbildung der Erfindung sind an dem Einsatz außen Rastnasen angeformt, die in eine innerhalb der Sackbohrung angeordnete zumindest bereichsweise umlaufende Nut eingreift. Hierbei ist eine gute Fixierung des Einsatzes innerhalb der Sackbohrung bei gleichzeitig einfacher Montage bewirkt. Dabei ist bevorzugt genau eine umlaufende Nut innerhalb der Sackbohrung angeordnet, in die sowohl die Nasen des Schließkörpers, als auch die Rastnasen des Einsatzes eingreifen.

In weiterer Ausgestaltung der Erfindung ist der Schließkörper und vorzugsweise auch der Einsatz aus Kunststoff hergestellt. Hierdurch ist eine kostengünstige Massenfertigung ermöglicht.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

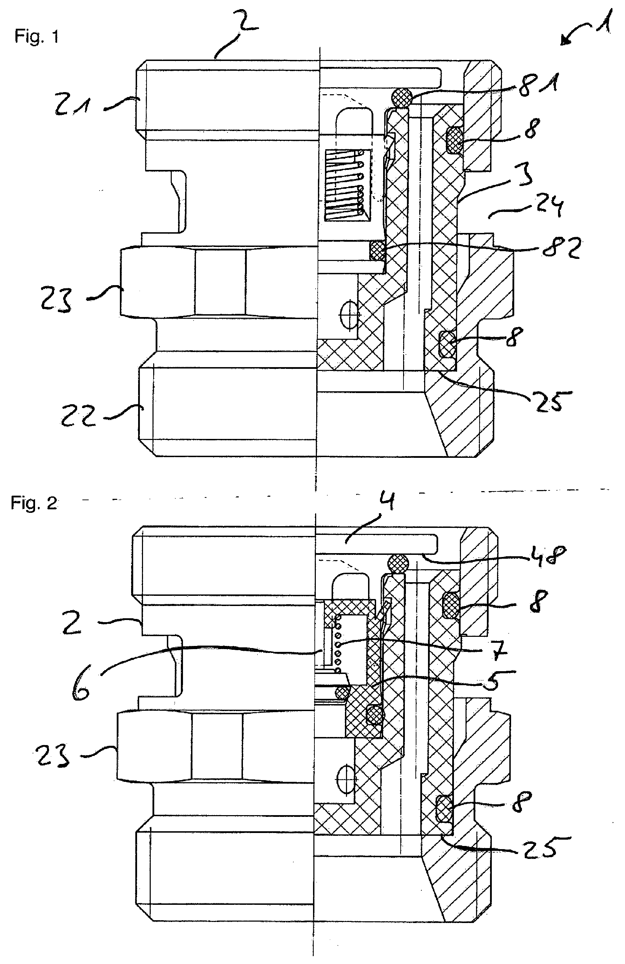

- Figur 1: die schematische Darstellung einer Rohrbelüftung im Teilschnitt;
- Figur 2: die Darstellung der Rohrbelüftung aus Figur 1 mit Darstellung des Einsatzes im Längsschnitt;

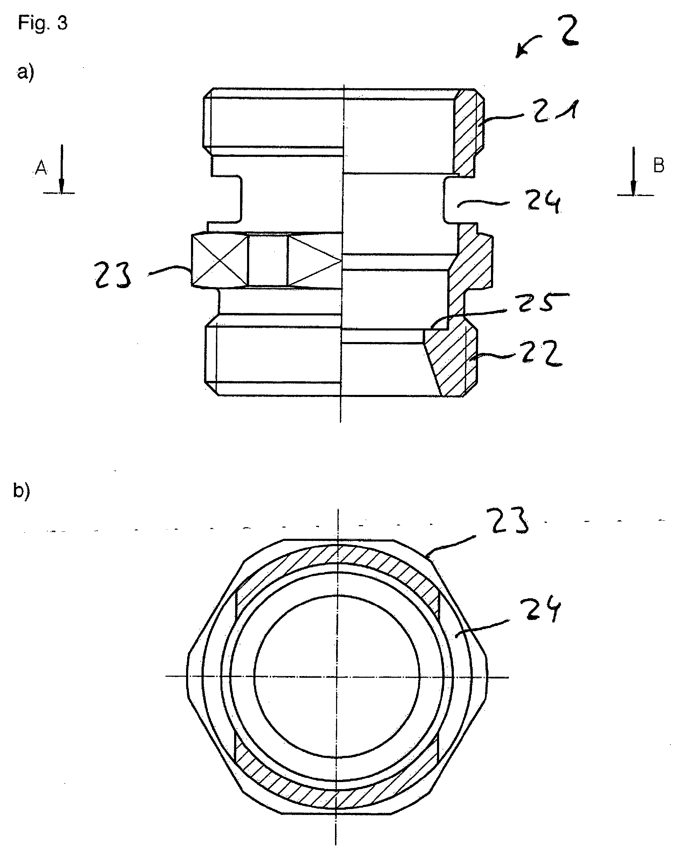

- Figur 3: die Darstellung des Belüftergehäuses des Rohrbelüfters aus Figur 1
a) in Teilschnittdarstellung;
b) im Schnitt A-B;

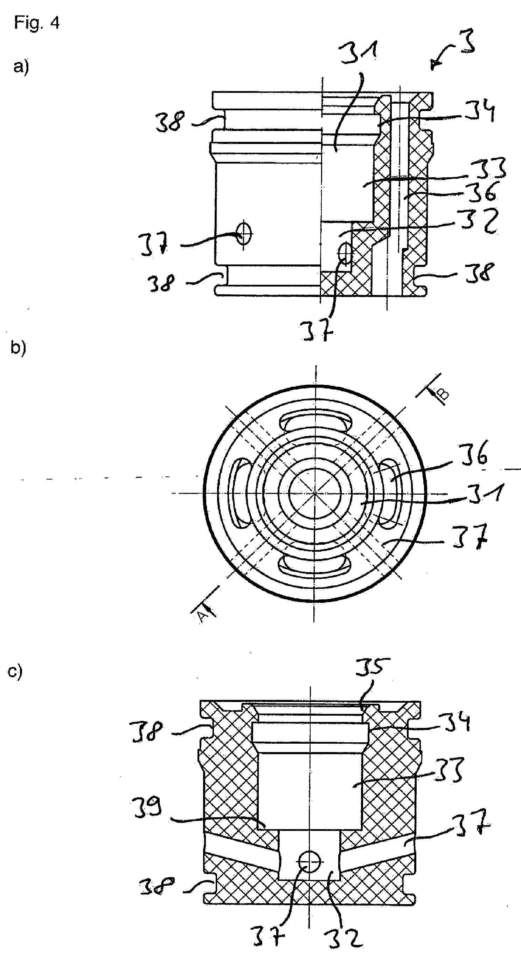

- Figur 4: die Darstellung des Belüfterkörpers des Rohrbelüfters aus Figur 1
a) in Teilschnittdarstellung;
b) in der Ansicht von unten;
c) im Längsschnitt;

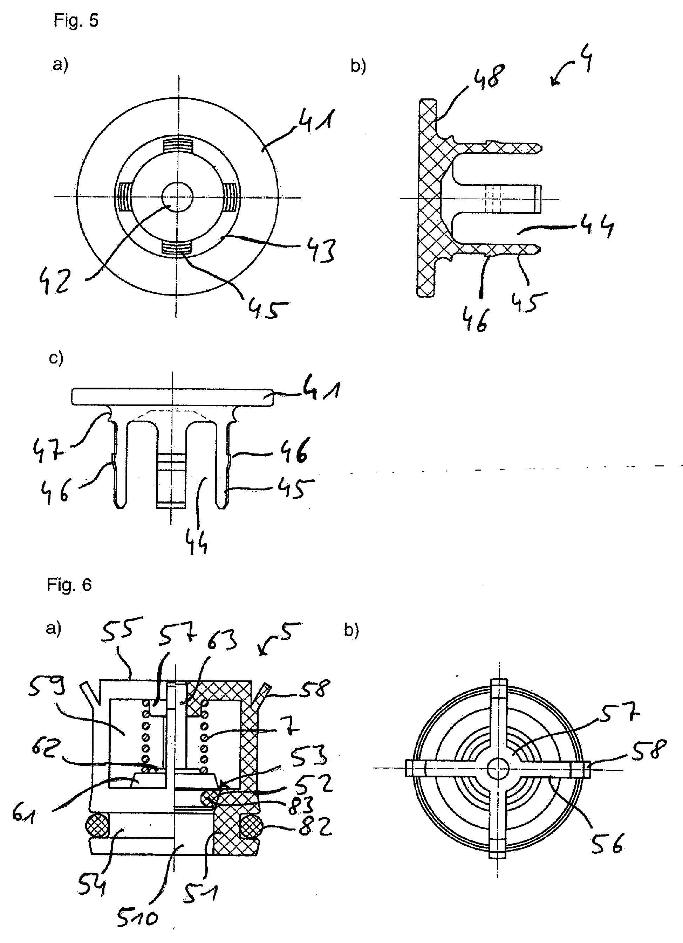

- Figur 5: die Darstellung des Schließkörpers des Rohrbelüfters aus Figur 1
a) in der Ansicht von unten;
b) im Längsschnitt;
c) in Seitenansicht;
- Figur 6: die Darstellung des Einsatzes des Rohrbelüfters aus Figur 1
a) im Teilschnitt und
b) in der Draufsicht.

Der als Ausführungsbeispiel gewählte Rohrbelüfter 1 besteht im Wesentlichen aus einem Belüftergehäuse 2, der einen Belüfterkörper 3 aufnimmt, in dem ein Schließkörper 4 sowie ein Einsatz 5 angeordnet ist, der einen über eine Schraubenfeder 7 vorgespannten Ventilstempel 6 aufweist.

Das Belüftergehäuse 2 ist im Ausführungsbeispiel als im Wesentlichen hohlzylindrisches Messingdrehteil ausgeführt. Endseitig ist das Belüftergehäuse 2 mit einem zulaufseitigen Anschlussgewinde 21 sowie einen ablaufseitigen Anschlussgewinde 22 versehen. Zwischen den endseitigen Anschlussgewinden 21, 22 ist an das Belüftergehäuse 2 ein Außensechskant 23 angeformt. Oberhalb des Außensechskants 23 sind weiterhin gegenüberliegend zwei Fenster 24 eingebracht. Innen ist an dem Belüftergehäuse 2 in Höhe des ablaufseitigen Anschlussgewindes 22 ein Absatz 25 angeformt, der in Richtung des ablaufseitigen Endes konisch sich erweiternd ausgebildet ist.

Der Belüfterkörper 3 ist im Ausführungsbeispiel als Kunststoffspritzgussteil ausgebildet. Mittig ist in den Belüfterkörper 3 entlang seiner Mittelachse eine Sackbohrung 31 eingebracht, die im Bereich ihres Grundes durchmesserreduziert ausgebildet ist, wodurch ein durchmesserreduzierter Belüftungsabschnitt 32 gebildet ist, an den sich eine Aufnahme 33 für den Einsatz 5 anschließt. Durch den Übergang zwischen Belüftungsabschnitt 32 und Aufnahme 33 ist ein Absatz 39 zur Anlage des Einsatzes 5 ausgebildet. An ihrem dem Belüftungsabschnitt 32 gegenüberliegenden Ende ist in die Sackbohrung 31 umlaufend eine Nut 34 eingebracht. Oberhalb der Nut 34 ist der Rand der Sackbohrung 31 mit einer Phase 35 versehen. Umlaufend der Sackbohrung 31 sind in dem Belüfterkörper 3 exzentrisch vier jeweils um 90° versetzt zueinander angeordnete axiale Durchflusskanäle 36 eingebracht, die im Bereich des Belüftungsabschnitts 32 einen verbreiterten Querschnitt aufweisen. Weiterhin sind jeweils um 45° versetzt zu den Durchflusskanälen 36 seitlich umlaufend vier radiale Belüftungskanäle 37 eingebracht, die in Richtung des belüftungsabschnittsseitigen Endes des Belüfterkörpers 3 geneigt sind und in den Belüftungsabschnitt 32 münden. Außen ist der Belüfterkörper 3 an seinen beiden Enden jeweils mit einer umlaufenden Nut 38 zur Aufnahme eines O-Rings 8 versehen.

Der Schließkörper 4 ist im Ausführungsbeispiel als Kunststoffspritzgussteil ausgebildet. Er besteht im Wesentlichen aus einer kreisrunden Scheibe 41, die mittig mit einer Bohrung 42 versehen ist. Auf ihrer dem Einsatz 5 zugewandten Unterseite ist an die Scheibe 41 umlaufend der Bohrung 42 ein kreisrunder Kragen 43 angeformt, in den um jeweils 90° versetzt zueinander vier Aussparungen 44 eingebracht sind, wodurch orthogonal zur Scheibe 41 sich erstreckende Stege 45 ausgebildet sind. Außen sind die Stege 45 etwa mittig mit jeweils einer Nase 46 zum Eingriff in die Nut 34 des Belüfterkörpers 3 versehen. Weiterhin ist in den Kragen 43 an die Scheibe 41 angrenzend eine umlaufende Kehle 47 zur Aufnahme eines O-Rings 81 eingebracht.

Der Einsatz 5 ist im Ausführungsbeispiel als im Wesentlichen hohlzylindrisches Kunststoffspritzgießteil ausgebildet. An seinem dem Belüftungsabschnitt 32 des Belüfterkörpers 3 zugewandten Ende ist in dem Einsatz 5 innen umlaufend ein Absatz 51 angeformt, der an seinem inneren Ende mit einer Phase 52 versehen ist, wodurch ein Ventilsitz 53 ausgebildet ist. Außen ist im Bereich des Absatzes 51 eine umlaufende Nut 54 zur Aufnahme eines O-Rings 82 angeordnet. An seiner dem Absatz 51 gegenüberliegenden Oberseite ist den Einsatz 5 überdeckend eine Verstrebung 55 angeformt, die aus vier um 90° versetzt zueinander sich radial nach innen erstreckenden Streben 56 gebildet ist, wo die Streben 56 an eine zentrisch angeordnete Hülse 57 angeformt sind. Außen sind an dem Einsatz 5 im Bereich der Streben 56 vier Rastnasen 58 zum Eingriff in die umlaufende Nut 34 des Belüfterkörpers 3 angeformt. Weiterhin sind zwischen dem Absatz 51 und der Verstrebung 55 in die Mantelfläche des Belüfterkörpers 3 in regelmäßigen Abständen zueinander vier Fenster 59 angeordnet.

Auf dem Ventilsitz 53 des Einsatzes 5 setzt ein Ventilstempel 6 auf, der über eine Schraubenfeder 7 gegen den Ventilsitz 53 vorgespannt ist. Der Ventilstempel 6 ist im Wesentlichen gebildet aus einem kegelstumpfförmig ausgebildeten Stempelfuß 61, an den sich ein durchmesserreduzierter Absatz 62 anschließt, der in einen wiederum durchmesserreduzierten Schaft 63 übergeht. Der Stempelfuß 61 liegt an dem Ventilsitz 53 auf einem an der Phase 52 anliegenden O-Ring 83 an, über den er gegenüber der durch den Absatz 51 begrenzten Belüftungsöffnung 510 abgedichtet ist. Dabei ragt der Schaft 63 in die Hülse 57 der Verstrebung 55 des Einsatzes 5 hinein, über die der Ventilstempel 6 geführt ist. Die Schraubenfeder 7 liegt an ihrem einen Ende an dem Außenmantel der Hülse 57 und mit ihrem gegenüberliegenden Ende außen an dem Ansatz 62 des Ventilstempels 6 an.

Der Einsatz 5 ist mit dem in diesem angeordneten Ventilstempel 6 in der Aufnahme 33 des Belüfterkörpers 3 positioniert, wo er auf dem Absatz 39 aufliegt und über den O-Ring 82 gegenüber der Aufnahme 33 abgedichtet ist. Dabei ist der Einsatz 5 über die Rastnasen 58, die in die umlaufende Nut 34 des Belüfterkörpers 3 eingreifen, in der Aufnahme 33 fixiert. Der Schließkörper 4 ist mit seinem umlaufenden Kragen 43 derart in den Belüfterkörper eingesetzt, dass die Nasen 46 der Stege 45 ebenfalls in die Nut 34 eingreifen. Dabei sind die Nasen 46 innerhalb der Nut 34 vertikal verschiebbar, wodurch der Schließkörper 4 axial verschieblich in dem Belüfterkörper 3 gelagert ist. Dabei liegt der O-Ring 81 des Schließkörpers 4 auf dem zwischen Aufnahme 33 und Durchflusskanälen 36 gebildeten Rand des Belüfterkörpers 3 auf, wobei der über den ORing 81 hinausragende umlaufende Rand 48 des Schließkörpers 4 in die Durchflusskanäle 36 beziehungsweise deren gedachte Verlängerung hineinragt. Der so ausgebildete Belüfterkörper 3 ist in das Belüftergehäuse 2 eingesetzt und liegt auf dem Absatz 25 auf. Dabei ist der Belüfterkörper 3 über die O-Ringe 8 beidseitig der Fenster 24 gegenüber dem Belüftergehäuse 2 abgedichtet.

Der so ausgestaltete Rohrbelüfter wird mittels des zuleitungsseitigen Anschlussgewindes 21 an eine Trinkwasserleitung angeschlossen und über sein ablaufseitiges Anschlussgewinde 22 mit einem Verbraucher, beispielsweise einer Waschmaschine verbunden. Aufgrund des in der - nicht dargestellten - Trinkwasserleitung herrschenden Überdrucks wird der Schließkörper 4 durch das unter Druck austretende Trinkwasser mit dem Ohrring 81 gegen den Belüfterkörper 3 gepresst. Das Trinkwasser fließt seitlich an dem Schließkörper vorbei durch die vier Durchflusskanäle 36 zum - nicht dargestellten - Verbraucher. Durch einen in der Trinkwasserzuleitung möglicherweise auftretenden Unterdruck wird der Schließkörper 4 nach oben von dem Belüfterkörper 3 weg bewegt, wodurch zwischen dem O-Ring 81 und dem Belüfterkörper 3 ein Spalt ausgebildet wird. Durch den anliegenden Unterdruck wird nun Luft durch die Belüftungskanäle 37 durch die Belüftungsöffnung 510 des Einsatzes 5 hindurchgesaugt, wodurch der Ventilstempel 6 entgegen der Vorspannung der Schraubenfeder 7 von dem Ventilsitz 53 abgehoben wird, sodass der Luftstrom passieren kann. Der Schaft 63 gleitet hierbei durch die Hülse 57 der Verstrebung 55 sowie durch die hiermit korrespondierende Bohrung 42 des Schließkörpers 4, wodurch der Ventilstempel 6 eine vertikale geführte Bewegung erfährt. Durch die angesaugte Luft wird der herrschende Unterdruck ausgeglichen, wodurch ein Ansaugen von in dem - nicht dargestellten - Verbraucher befindlichen Wasser wirksam vermieden ist.

In dem Fall, dass durch wiederholtes Abheben des Schließkörpers 4 aufgrund von Verkrustungen oder Verschmutzungen ein optimaler Sitz der Dichtung 81 nicht mehr gegeben ist, wodurch ein Wassereintritt in die Aufnahme 33 des Belüfterkörpers 3 erfolgt, ist ein Eintritt dieses Wassers in den Belüftungsabschnitt 32 des Belüfterkörpers 3 durch den Ventilstempel 6, der über die Schraubenfeder 7 gegen den Ventilsitz 53 des Einsatzes 5 vorgespannt ist, verhindert. Der Einsatz 5 ist wiederum über den O-Ring 82 gegenüber der Aufnahme 33 des Belüfterkörpers 3 abgedichtet.

## Patentansprüche

1. Rohrbelüfter (1), fumfassend einen Belüfterkörper (3) mit axialen Durchflusskanälen (36) zum Durchtritt eines Wasserstroms, die radial versetzt zu einer zentrisehen Sackbohrung (31) angeordnet sind, wobei in die Sackbohrung (31) wenigstens ein seitlich von außen radial nach innen verlaufender Belüftungskanal mündet und wobei die Sackbohrung (31) einen axial bewegbaren Schließkörper (4) aufnimmt, der mit einer Dichtung versehen ist und durch den die Sackbohrung (31) in einer Grundstellung verschlossen ist, wobei der Schließkörper (4) einen radialen, zumindest bereichsweise umlaufenden Rand (48) aufweist, der in wenigstens einen Durchflusskanal (36) hineinragt, **dadurch gekennzeichnet, dass** innerhalb der Sackbohrung (31) ein Ventilkörper angeordnet ist, der über ein Federelement gegen einen oberhalb der Einmündung des wenigstens einen Belüftungskanals (37) innerhalb der Sackbohrung (31) angeordneten Ventilsitz (53) vorgespannt ist.

2. Rohrbelüfter nach Anspruch 1, **dadurch gekennzeichnet, dass** der Schließkörper (4) eine Scheibe (41) umfasst, an die axial ein zumindest bereichsweise umlaufender Kragen (43) mit geringerem Durchmesser angeformt ist.

3. Rohrbelüfter nach Anspruch 2, **dadurch gekennzeichnet, dass** an dem Kragen (43) außen Nasen (46) angeordnet sind, die in eine innerhalb der Sackbohrung (31) angeordnete zumindest bereichsweise umlaufende Nut (34) eingreifen.

4. Rohrbelüfter nach einem der vorgenannten Ansprüche, **dadurch gekennzeichnet, dass** in der Sackbohrung (31) ein hülsenförmiger Einsatz (5) eingebracht ist, in dem der Ventilkörper entlang einer Führung axial verschiebbar angeordnet ist, wobei der Ventilkörper als Ventilstempel (6) ausgebildet ist, der über das Federelement gegen einen in dem Einsatz (5) angeformten Ventilsitz (53) vorgespannt ist.

5. Rohrbelüfter nach Anspruch 4, **dadurch gekennzeichnet, dass** an dem Einsatz (5) an seiner dem Ventilsitz (53) gegenüberliegenden Oberseite eine horizontale Verstrebung (55) angeordnet ist, wobei das Federelement eine Druckfeder, insbesondere eine Schraubenfeder (7) ist, die zwischen Ventilkörper und Verstrebung (55) verspannt ist.

6. Rohrbelüfter nach Anspruch 5, **dadurch gekennzeichnet, dass** die Führung durch eine in der Verstrebung (55) angeordnete Führungshülse (57) gebildet ist, in die der Ventilstempel (6) hineinragt.

7. Rohrbelüfter nach Anspruch 5 oder 6, **dadurch gekennzeichnet, dass** die Verstrebung (55) durch wenigstens drei, bevorzugt vier in gleichem Winkel zueinander sich radial von außen in die Mitte des Einsatzes (5) erstreckende Streben (56) gebildet ist.

8. Rohrbelüfter nach einem der Ansprüche 4 bis 7, **dadurch gekennzeichnet, dass** an dem Einsatz (5) außen Rastnasen (58) angeformt sind, die in eine innerhalb der Sackbohrung (31) angeordnete zumindest bereichsweise umlaufende Nut (34) eingreifen.

9. Rohrbelüfter nach Anspruch 8, **dadurch gekennzeichnet, dass** genau eine umlaufende Nut (34) innerhalb der Sackbohrung (31) angeordnet ist, in die sowohl die Nasen (46) des Schließkörpers (4), als auch die Rastnasen (58) des Einsatzes (5) eingreifen.

10. Rohrbelüfter nach einem der vorgenannten Ansprüche, **dadurch gekennzeichnet, dass** der Schließkörper (4) aus Kunststoff hergestellt ist.

11. Rohrbelüfter nach einem der Ansprüche 4 bis 10, **dadurch gekennzeichnet, dass** der Einsatz (5) aus Kunststoff hergestellt ist.

## Claims

1. Tube aerator (1) comprising an aerator body (3) having axial flow channels (36) for passage of a water flow, which are arranged radially offset to a central blind hole (31), wherein at least one ventilation duct running laterally from the outside radially to the inside leads into the blind hole (31) and wherein the blind hole (31) receives an axially movable closing body (4), which is provided with a seal and by means of which the blind hole (31) is closed in an initial position, wherein the closing body (4) has a radial, at least partially circumferential edge (48), which protrudes into at least one flow channel (36), **characterised in that** inside the blind hole (31) a valve body is arranged, which is pre-tensioned by way of a spring element against a valve seat (53) arranged above the junction of the at least one ventilation duct (37) inside the blind hole (31).

2. Tube aerator according to claim 1, **characterised in that** the closing body (4) comprises a disc (41), to which an at least partially circumferential collar (43) with a smaller diameter is axially moulded.

3. Tube aerator according to claim 2, **characterised in that** outside at the collar (43) lugs (46) are arranged, which engage in an at least partially circumferential groove (34) arranged inside the blind hole (31).

4. Tube aerator according to one of the previous claims, **characterised in that** in the blind hole (31) a sleeve-shaped insert (5) is inserted, in which the valve body is axially movably arranged along a guide, wherein the valve body is designed as a valve stem (6), which is pre-tensioned by way of the spring element against a valve seat (53) moulded-on in the insert (5).

5. Tube aerator according to claim 4, **characterised in that** at the insert (5) at its upper side opposite the valve seat (53), a horizontal strut arrangement (55) is arranged, wherein the spring element is a pressure spring, particularly a coil spring (7), which is braced between valve body and strut arrangement (55).

6. Tube aerator according to claim 5, **characterised in that** the guide is formed by a guide sleeve (57) arranged in the strut arrangement (55), into which the valve stem (6) protrudes.

7. Tube aerator according to claim 5 or 6, **characterised in that** the strut arrangement (55) is formed by at least three, preferably four struts (56) extending equi-angularly towards each other radially from the outside into the centre of the insert (5).

8. Tube aerator according to one of claims 4 to 7, **characterised in that** latching lugs (58) are moulded to the outside of the insert (5), which engage in an at least partially circumferential groove (34) arranged inside the blind hole (31).

9. Tube aerator according to claim 8, **characterised in that** exactly one circumferential groove (34) is arranged inside the blind hole (31), in which the lugs (46) of the closing body (4) as well as the latching lugs (58) of the insert (5) engage.

10. Tube aerator according to one of the previous claims, **characterised in that** the closing body (4) is made of plastic.

11. Tube aerator according to one of claims 4 to 10, **characterised in that** the insert (5) is made of plastic.

## Revendications

1. Reniflard (1) comprenant un corps (3) de reniflard avec canaux de passage (36) axiaux permettant à un flux d'eau de passer, agencés espacés radialement par rapport à un alésage borgne (31) centré, sachant que dans l'alésage borgne (31) aboutit au moins un canal d'aération pénétrant latéralement de l'extérieur et radialement vers l'intérieur, et sachant que l'alésage borgne (31) reçoit un corps d'obturation déplaçable axialement et équipé d'un joint, corps par lequel l'alésage borgne (31) est obturé dans une position de base, sachant que le corps d'obturation (4) présente un bord (48) radial, au moins localement périphérique, qui fait saillie dans au moins un canal de passage (36), **caractérisé en ce qu'**à l'intérieur de l'alésage borgne (31) est agencé un corps de vanne précontraint via un élément ressort contre un siège (53) de vanne agencé au-dessus de l'aboutissement d'au moins un canal d'aération (37) dans l'alésage borgne (31).

2. Reniflard selon la revendication 1, **caractérisé en ce que** le corps d'obturation (4) comprend un disque (41) contre lequel a été moulé axialement un col (43) au moins localement périphérique et de petit diamètre.

3. Reniflard selon la revendication 2, **caractérisé en ce que** des saillies (46) sont agencées contre la partie extérieure du col (43), saillies qui engrènent dans la gorge (34) au moins localement périphérique agencée à l'intérieur de l'alésage borgne (31).

4. Reniflard selon l'une des revendications précédentes, **caractérisé en ce que** dans l'alésage borgne (31) a été introduit un insert (5) en forme de douille dans lequel le corps de vanne est agencé de façon à pouvoir se déplacer axialement le long d'un guidage, sachant que le corps de vanne est configuré en tige (6) de vanne, tige qui est précontrainte via l'élément ressort contre un siège (53) de vanne modelé dans l'insert (5).

5. Reniflard selon la revendication 4, **caractérisé en ce que** sur l'insert (5), sur son côté supérieur opposé au siège (53) de vanne, est agencé un système de renforcement (55) horizontal, sachant que l'élément ressort est un ressort de compression, en particulier un ressort hélicoïdal (7) comprimé entre le corps de vanne et le système de renforcement (55).

6. Reniflard selon la revendication 5, **caractérisé en ce que** le guidage est formé par une douille de guidage (57) agencée dans le système de renforcement (55) et qui fait saillie dans la tige (6) de vanne.

7. Reniflard selon la revendication 5 ou 6, **caractérisé en ce que** le système de renforcement (55) est formé par au moins trois, de préférence quatre renforts (56) s'étendant selon le même angle de l'extérieur vers le milieu de l'insert (5).

8. Reniflard selon l'une des revendications 4 à 7, **caractérisé en ce qu'**à l'extérieur de l'insert (5) ont été modelées des saillies (58) de retenue qui engrènent dans une gorge (34) au moins localement périphérique agencée à l'intérieur de l'alésage borgne (31).

9. Reniflard selon la revendication 8, **caractérisé en ce qu'**est agencée exactement une gorge (34) périphérique dans l'alésage borgne (31), dans laquelle engrènent aussi bien les saillies (46) du corps d'obturation (4) que les saillies (58) de retenue de l'insert (5).

10. Reniflard selon l'une des revendications précédente, **caractérisée en ce que** le corps d'obturation (4) est fabriqué en matière plastique.

11. Reniflard selon l'une des revendications 4 à 10, **caractérisé en ce que** l'insert (5) est fabriqué en matière plastique.
